# EUROPEAN PATENT SPECIFICATION

(11) **EP 2 675 262 B1**
(45) Date of publication and mention of the grant of the patent: **27.05.2015**
(21) Application number: 11703903.2
(22) Date of filing: 17.02.2011
(51) Int. Cl.: A01D 41/12, A01F 12/00, A01F 12/20

(54) **A METHOD OF PREVENTING DEBRIS ACCUMULATION WITHIN VOIDS OF CROP ENGAGING COMPONENTS OF AN AGRICULTURAL COMBINE**
VERFAHREN ZUR VERHINDERUNG DER ANSAMMLUNG VON SCHMUTZTEILCHEN IN HOHLRÄUMEN VON ELEMENTEN EINES MÄHDRESCHERS, DIE IN KONTAKT MIT ERNTEPFLANZEN KOMMEN
PROCÉDÉ PERMETTANT D'EMPÊCHER L'ACCUMULATION DE DÉBRIS DANS DES VIDES DE COMPOSANTS DE MOISSONNEUSE-BATTEUSE EN ENGAGEMENT AVEC LA RÉCOLTE

(43) Date of publication of application: 25.12.2013
(73) Proprietor: CNH Industrial Belgium nv, 8210 Zedelgem (BE)
(72) Inventor: FARLEY, Herb M., Elizabethtown Pennsylvania 17022 (US)
(74) Representative: CNH Industrial IP Department
(86) International application number: PCT/EP2011/052339
(87) International publication number: WO 2012/110090

(56) References cited:
- GB-A- 1 204 083
- GB-A- 1 306 020
- JP-A- 2001 204 235
- US-A- 3 848 609
- US-A- 4 796 645
- US-A1- 2008 167 100
- US-A1- 2011 143 826
- US-B1- 6 206 779

## Description

### BACKGROUND OF THE INVENTION

The present invention relates generally to agricultural combines, and more particularly, to a method of preventing debris accumulation within voids or cavities of crop engaging components of an agricultural combine.

Agricultural equipment known as agricultural combines or combine harvesters are designed to harvest a variety of crops. Moreover, a single combine can be used to harvest a variety of crop materials. However, the use of such combines result in the combine's crop engaging components generating build up of crop debris, i.e., crop materials, such as grains and residue. Such build up of debris can accumulate in various cavities of the combine's crop engaging components, such as the feederhouse, thresher system, and residue discharge system. The buildup of debris is difficult to remove, if at all possible, labor intensive, time consuming and expensive.

The buildup of crop debris within the combine can and often results in cross contamination of crop materials when the combine is used to harvest a variety of crop materials. Moreover, such cross contamination can lead to the cross breading of crops. In today's seed markets, the preservation of identity of specific genetics for crops is a significant goal. The severity of crop material/debris buildup has been studied and documented. To prevent such buildup and commingling of crop materials, labor intensive and time consuming clean out procedures are required.

A particular place where crop debris may accumulate, are the cavities between the rasp bar elements of the threshing rotor and their mounting brackets, as shown in US-A-2008/167100. It has already been proposed to use high pressure air to dislodge material in a combine. For instance, JP-A-2001 204235 discloses the use of a fan for removing material from a grain tank. However, such approach is not practical in movable parts such as threshing rotors.

Thus, there is a need for a method of preventing the buildup and accumulation of crop debris of a combine's crop engaging components that is economically feasible and effective at addressing the foregoing problems of cross-contamination.

### BRIEF SUMMARY OF THE INVENTION

In a preferred embodiment, the present invention provides a method of preventing debris accumulation within voids of crop engaging components of an agricultural combine, comprising the steps of: identifying cavities of crop engaging components of an agricultural combine; and injecting within the cavities a fill material in an amount such that the cavities are filled with the fill material and adheres to the cavities.

In another preferred embodiment, the present invention provides a method of preventing debris accumulation of crop engaging components of an agricultural combine, comprising the steps of: identifying a cavity of crop engaging components of an agricultural combine; providing a receptacle having an injection port for capping the cavity; attaching the receptacle to cap the cavity; and injecting within the cavity a fill material through the injection port in an amount such that the cavity is partially or completely filled with the fill material and adheres to the cavity and receptacle.

In yet another preferred embodiment, the present invention provides a rasp bar for mounting on a rotor of an agricultural combine comprising: a rasp bar element that includes: a roof section, a back wall section connected to the roof section, and lateral side wall sections connected to the roof section; a mounting bracket connected to the rotor, the mounting bracket including: an upper wall section, a side wall section connected to the upper wall section, and a back wall section connected to the upper wall section; a fastener for connecting the rasp bar element to the mounting bracket; and a cavity formed by at least one of the rasp bar element and mounting bracket filled with a fill material.

### BRIEF DESCRIPTION OF THE SEVERAL VIEWS OF THE DRAWINGS

The foregoing summary, as well as the following detailed description of the invention, will be better understood when read in conjunction with the appended drawings. For the purpose of illustrating the invention, there are shown in the drawings embodiments which are presently preferred. It should be understood, however, that the invention is not limited to the precise arrangements and instrumentalities shown.

The invention will now be described in further detail, by way of example, with reference to the accompanying drawings, in which:
FIGURE 1 is a partial cross-sectional, side, elevational view of an agricultural combine;
FIGURE 2 is a cross-sectional, partial, side, elevational view of a thresher rotor of the agricultural combine of FIGURE 1;
FIGURE 3 is an enlarged, rear, perspective view of a rasp bar of the thresher rotor of FIGURE 2 in accordance with a preferred embodiment of the present invention;
FIGURE 4 is an enlarged, rear, perspective view of the rasp bar of the FIGURE 3 with a receptacle assembled to a cavity of the rasp bar;
FIGURE 5 is an enlarged, front, perspective view of the rasp bar of FIGURE 4 with a receptacle assembled to the cavity of the rasp bar;
FIGURE 6 is an enlarged, front, perspective view of the rasp bar of FIGURE 5 with the cavity filled with a fill material;
FIGURE 7 is a flow chart of a method of preventing debris acumination within voids of crop engaging components of an agricultural combine in accordance with another preferred embodiment of the present invention;
FIGURE 8 is a flow chart of a method of preventing debris acumination within voids of crop engaging components of an agricultural combine in accordance with yet another preferred embodiment of the present invention;
FIGURE 9 is a enlarged, top, perspective view of a receptacle for capping cavities of crop engaging components of an agricultural combine in accordance with another preferred embodiment of the present invention;
FIGURE 10 is a enlarged, bottom perspective view of the receptacle of FIGURE 9;
FIGURE 11 is a side, elevational view of a rotor of a combine having rasp bars in accordance with another preferred embodiment of the present invention;
FIGURE 12 is a side, cross-sectional view of the rasp bar of FIGURE 11; and
FIGURE 13 is a top plan view of the rasp bar of FIGURE 12.

### DETAILED DESCRIPTION OF THE INVENTION

Certain terminology is used in the following description for convenience only and is not limiting. The words "right, "left,""upper," and "lower" designate directions in the drawings to which reference is made. In particular, "fore" means towards the front and "aft" means towards the rear. In addition, "superior" means generally above while "inferior" means generally below and "laterally" means towards the outer sides. The terminology includes the words above specifically mentioned, derivatives thereof, and words of similar import.

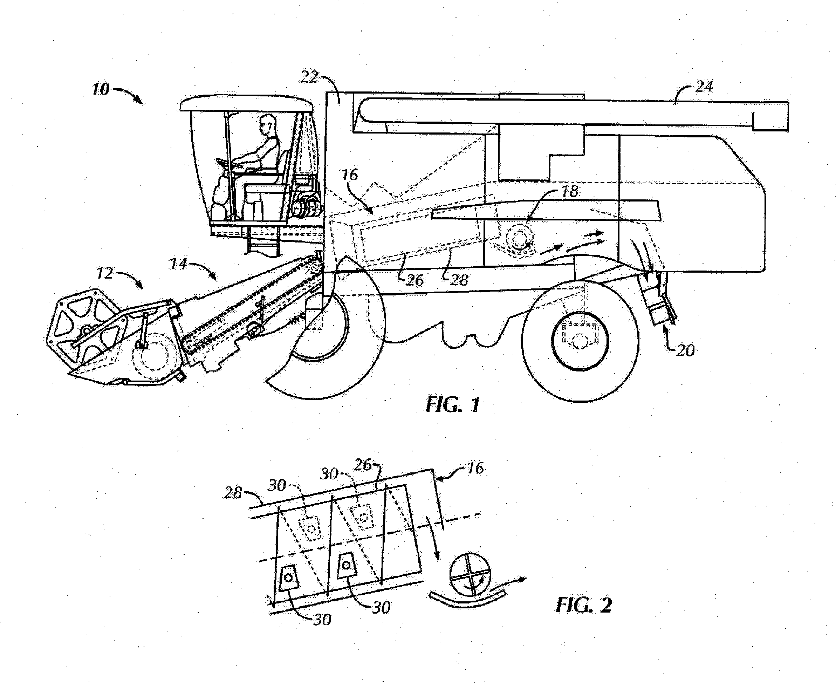

In a first preferred embodiment, the present invention provides for a method of preventing debris accumulation within voids for crop engaging components of an agricultural combine. Referring to FIGURE 1, an agricultural combine 10 generally includes a header 12, a feederhouse 14, a threshing system 16, a residue discharge system 18, a spreader 20, a grain bin 22, an unloader tube 24, rotor 26, and rotor concave 28. Additional components of the agricultural combine 10 include the cleaning shoe, chopper, rear axle, chassis areas, elevators, etc. Such additional components of the agricultural combine 10 are well known in the art and a detailed description of their function and structure is not necessary for a complete understanding of the present invention.

In general, each of the header 12, feederhouse 14, threshing system 16, residue discharge system 18, spreader 20, grain bin 22, unloader tube 24, rotor 26, and rotor concave 28 are crop engaging components of the combine 10. That is, these combine crop engaging components come in direct contact with crop materials. Such crop materials can include, but are not limited to seeds, ripened crops, grains, material other than grain (MOG), and crop residue.

Crop engaging components are typically multi-component assemblies that are assembled together to form their respective structures. By way of example only, as shown in FIGURES 1 and 2, the threshing system 16 includes the threshing rotor 26 and the concave 28. The threshing rotor 26 includes a plurality of rasp bars 30 mounted to the threshing rotor 26. The rasp bars 30 have been identified as having cavities or voids that can accumulate a significant amount of crop debris and thus a source of cross-contamination for crops. It is believed that due to the rotary nature of the threshing rotor 26 that the movement of the rasp bars 30 during operation attracts or forces crop debris within the cavities of the rasp bars 30.

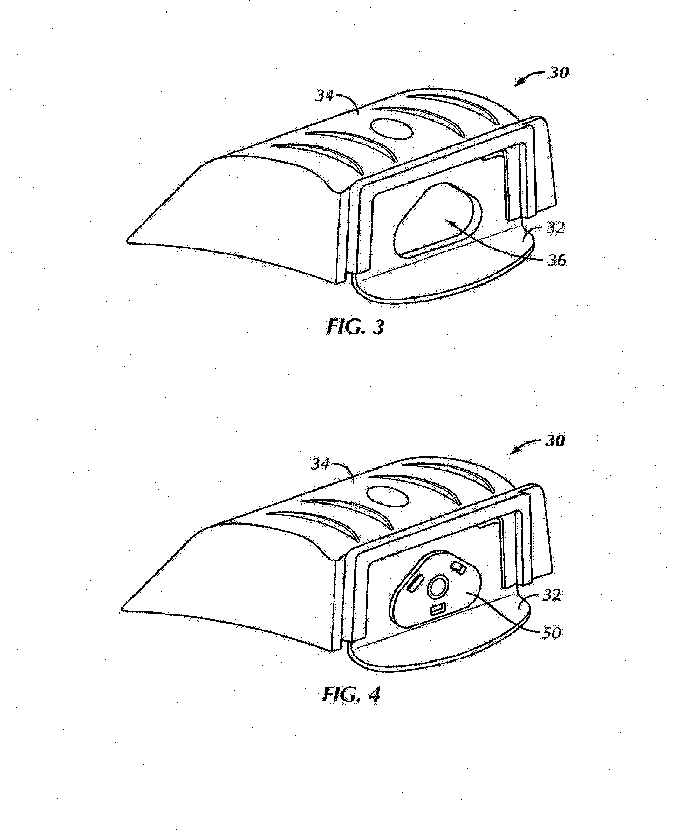

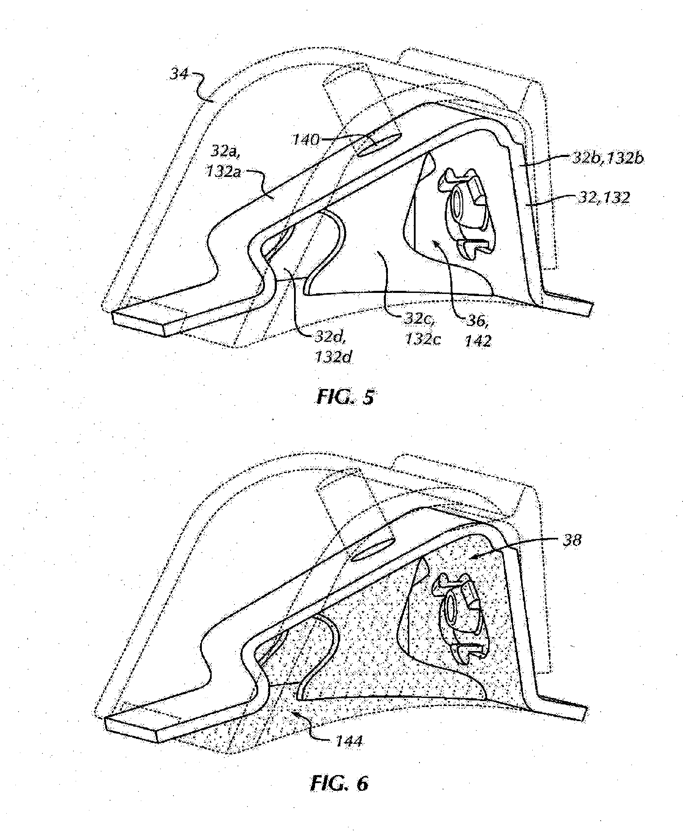

An exemplary rasp bar 30 is shown in FIGURES 3 and 4. The rasp bar 30 includes a mount 32 and a rasp bar element 34. The rasp bar element 34 is connected to the mount 32, typically by a nut and bolt configuration. The mount 32 is connected to the threshing rotor 26. The structure of such rasp bars 30 are well known in the art. Such conventional rasp bars 30 can also include a cavity 36. The cavity 36 can be formed by the rasp bar element 34 and/or mount 32, such as by a rearward end of the mount 32 and the walls of the rasp bar element 34. As shown in FIGURE 5, for example, the cavity 36 can be formed from a plurality of surfaces 32a-d of the mount 32 or in combination with the internal surfaces of the rasp bar element 34. The cavity 36 has been indentified to accumulate crop debris after normal operations. As illustrated in FIGURE 5, such a cavity 36 has and internal geometry that renders it difficult to clean.

While the present invention has been described in detail with respect to the cavity 36 of a rasp bar 30, such a description is for exemplary purposes only. The present invention is applicable to any cavity within any crop engaging component of the combine 10.

To prevent the cavity 36 from becoming contaminated with crop debris, a fill material 38 (FIGURE 6) is injected into the cavity 36 to partially or completely fill the cavity 36. Filling the cavity 36 partially or completely with fill material 38 prevents the cavity 36 from becoming filled or contaminated with crop debris.

The fill material 38 can be any fill material capable of filling the cavity 36 and adequately adhering to the cavity walls without dislodging during normal operation of the combine 10. Preferably, the fill material 38 is an expandable rigid foam material, such as rigid polyurethane foam 38, that is self-expanding and self-curing. Suitable foams applicable to the present invention include polyurethane foam, such as ISOFOAM R-1322B, a polyurethane polyol blend containing a surfactant, catalyst, flame retardant and hydrochlorofluorocarbon, and ISOFOAM I-0732A, a polyurethane isocyanate, sold by IPI, Inc. of Elkton, MD which upon reaction forms a foam of relatively high density which adheres to the metallic members and cures into a rigid body. Preferably, the fill material 38 is self-expanding and self-curing with a short curing time of about one hour and preferably less than one hour. That is, the fill material 38 hardens in about one hour and preferably less than one hour, such that the fill material 38 can be trimmed. The fill material 38 preferably does not absorb water and is capable of being removed in a destructive manner, such as being chipped or trimmed off.

Such self-expanding, self-curing foam 38 is injected into the cavity 36 in a fluid state and then allowed to foam and expand many times its original volume, thereby creating a pressure to force the foam to fill all available void space of the cavity 36 to form a highly effective filled cavity to prevent the ingress of crop debris. The expansion of the foam 38 can also emerge from the cavity 36, thus giving a visual indication that the cavity 36 has been filled. Once the self-expanding, self-curing foam 38 hardens, it adheres tenaciously to all adjacent surfaces of the cavity 36. The expanded and hardened foam 38 can then be trimmed or contoured to generally match the surface contours of the cavities and provide a substantially uniform surface to the crop engaging component.

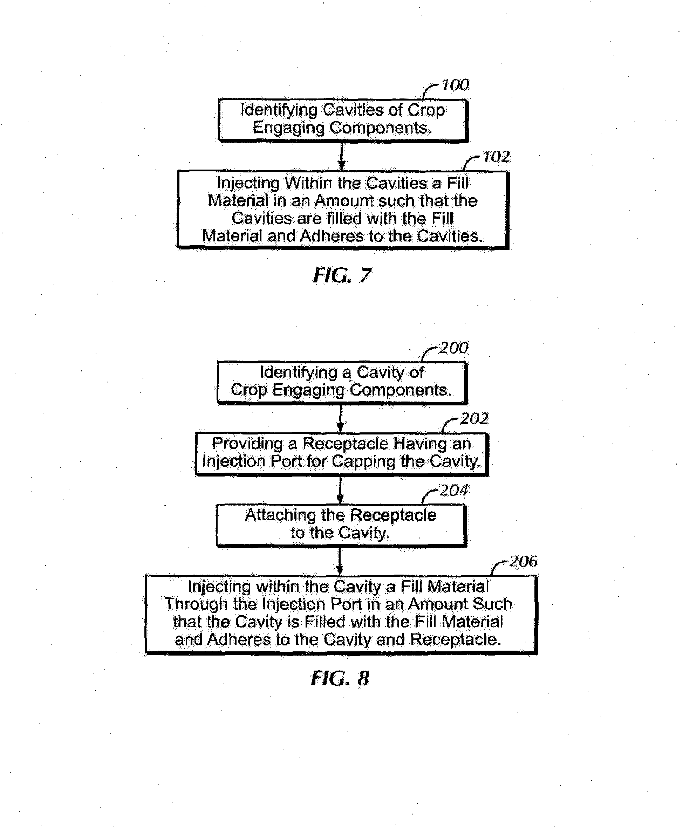

In sum, the present embodiment includes the steps of identifying cavities of crop engaging components of an agricultural combine 10 (Step 100) and injecting the cavities with a fill material 38 in an amount such that the cavities are partially or completely filled with the fill material 38 and adheres to the cavities (Step 102). (See FIGURE 7).

In a second preferred embodiment, the present invention provides a method of preventing debris accumulation of crop engaging components of an agricultural combine similar to that of the first preferred embodiment (FIGURE 8). In sum, the present embodiment includes the steps of identifying a cavity of crop engaging components of an agricultural combine 10 (Step 200), providing a receptacle 50 having an injection port 52 for capping the cavity (Step 202), attaching the receptacle 50 to a cavity opening to cap the cavity (Step 204), and injecting within the cavity a fill material 38 through the injection port 52 in an amount such that the cavity is partially or completely filled with the fill material 38 and adheres to the cavity and receptacle 50 (Step 206).

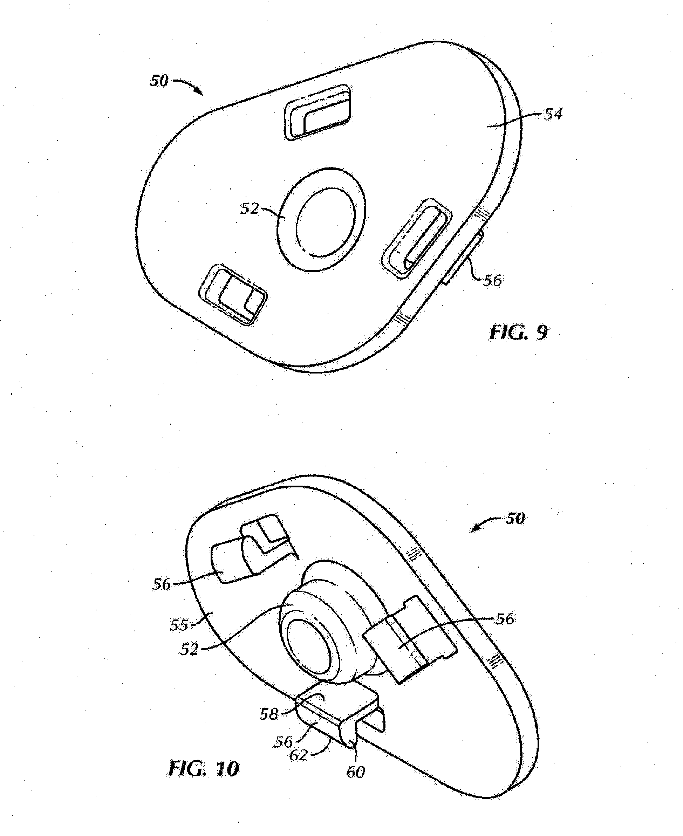

An exemplary receptacle 50, is shown in FIGURE 9. The receptacle 50 includes a capping portion 54 and an injection port 52. The capping portion 54 is generally configured to mount or reside on top of a cavity opening and preferably cover the entire cavity opening, as shown in FIGURE 4. Preferably, the capping portion 54 is configured to match the surface contours and outline profile of the crop engaging component's cavity opening. For example, the capping portion 54 can be of a planar, convex, concave, rectangular, triangular, or circular configuration. The receptacle 50 advantageously provides an additional surface 55 (FIGURE 10) upon which the foam 38 can adhere to, reduces the amount of surface area from which foam may emerge from that may require trimming or contouring, and facilitates the pressurization of the foam 38 within the cavity.

The injection port 52 is configured to allow for the injection of foam 38 into the cavity 36. Preferably, the injection port 52 is sized to receive an application nozzle (not shown) of a foam dispensing apparatus (not shown) or for receiving the flow of foam 38 itself. The dispensing apparatus can be e.g., a nozzle connected to a hose, a pump and a tank that contains the foam 38 or a portable dispensing apparatus, such as a disposable spray foam can. The injection port 52 can alternatively be configured as an elongated injection port 52, as shown in FIGURE 10. The elongated injection port 52 advantageously provides a direct flow path for or facilitates the flow of foam 38 to the cavity bottoms or internal surfaces. The elongated injection port 52 can also be configured as an angled injection port 52 to direct the flow of foam 38 at an angle relative to the direction of flow of the foam 38 from the application nozzle.

The receptacle 50 is also preferably configured with at least one fastener 56, and preferably a plurality of fasteners 56 to retain the receptacle 50 on or about the cavity 36 or cavity opening, so as to cap the cavity 36. The fasteners 56 can be, for example, a snap-fit or snap-lock fastener 56, a flange or lip, or of a tapered-lock configuration. Preferably, the fastener 56 is of a snap-fit configuration, as best shown in FIGURE 10. The snap-fit fasteners 56 include a planar elongated member 58 extending distally relative to the capping portion 54 and an outwardly extending flange portion 60. The outwardly extending flange portion 60 also includes an outwardly and proximally tapered chamfer 62. The chamfer 62 facilitates insertion of the receptacle 50 onto a cavity, such as the cavity portion formed by mount 32, as best shown in FIGURE 5. Preferably, the plurality of fasteners 56 are configured to generally circumscribe the injection port 52 to provide uniform stability to the connection between the receptacle 50 and the cavity 36. In particular, when the receptacle 50 is e.g., mounted to the mount 32, the fasteners 56 snap-fit about the walls of the mount 32 (FIGURE 5).

The receptacle 50 can be formed from a polymer, and preferably a rigid plastic, a metal, or a composite. The injection portion 52 can be formed from a metal, composite, a polymer, and preferably a rigid polymer or an elastomer.

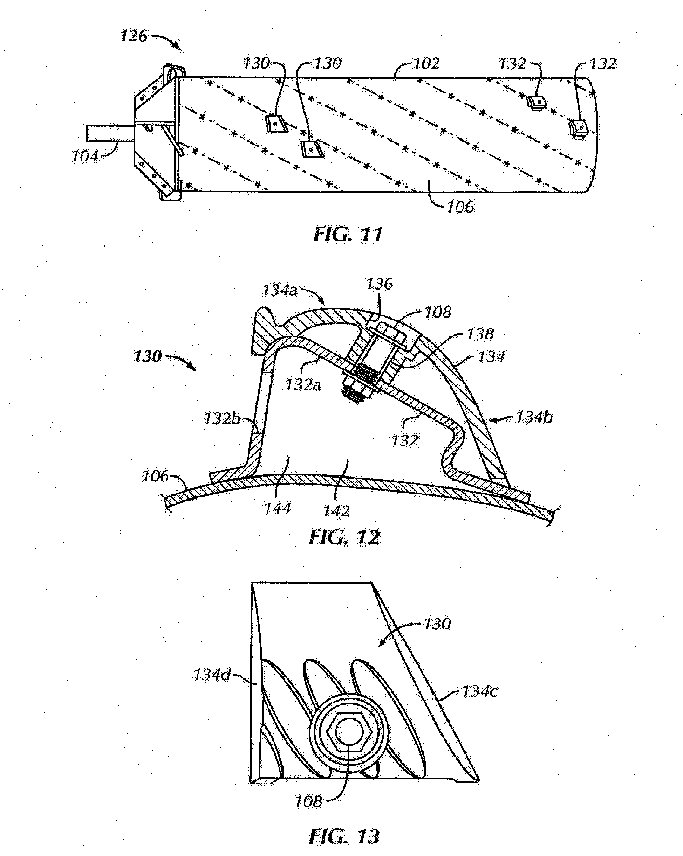

In a third preferred embodiment, the present invention provides a rasp bar 130 for mounting on a rotor 126 of an agricultural combine, as shown in FIGURES 11 and 12. The rotor 126 includes a cylindrical drum 102 mounted for rotation with a shaft 104. The drum 102 has a sheet steel skin 106 formed over an internal frame (not shown) which supports it on the shaft 104.

The rotor 126 includes a plurality of rasp bars 130. Each rasp bar 130 includes a rasp bar element 134 and a mounting bracket 132. The rasp bar element 134 is seated on the rotor 126 over the mounting bracket 132, and is fastened to the bracket 132 by a fastener 108 to form the rasp bar 130. The fastener 108 can be of a nut and bolt configuration, but can alternatively by any other type of fastener known in the art to sufficiently fasten the rasp bar element 134 to the mounting bracket 132. The mounting bracket 132 is preferably connected to the sheet steel skin 106 by e.g., welding. In the rotor 126 (FIGURE 11), the mounting brackets 132 are arranged in a helical pattern along the length of the drum 102. For purposes of illustration, a number of mounting brackets 132 are shown without rasp bar elements 134.

Referring to the FIGURES 12 and 13, the rasp bar element 134 of the present embodiment is generally dome shaped and includes a roof section 134a, a front wall section 134b and lateral wall sections (e.g., left and right wall sections) 134c and 134d. The outside profile of the roof section 134a generally slopes downwardly and rearwardly. The roof section 134a also includes a counter-bore 136 and an aperture or thru-hole 138 for receiving the fastener 108.

The mounting bracket 132 is generally configured as shown in FIGURES 5 (see mount 32) and 12. The mounting bracket 132 includes an upper wall section 132a, a back wall section 132b and lateral side wall sections 132c and 132d (FIGURES 5 and 12). The upper wall section 132a includes an aperture 140 (FIGURE 5) generally in line with the thru-hole 138 of the rasp bar element 134. A cavity 142 within the rasp bar 130 is formed by the walls of the rasp bar element 134 and/or the mounting bracket 132.

The rasp bar 130 also includes fill material 144 (FIGURE 6) to partially or completely fill at least the cavity 142. In addition to the cavity 142, the fill material 144 can be used to fill any cavity or plenum within or about the rasp bar 130. The fill material 144 is preferably a self-expanding, self-curing foam as described above in the previous embodiments.

The rasp bar 130 can optimally include a receptacle, such as receptacle 50 (FIGURE 9) for connecting to the back wall section 132b of the mounting bracket 132. When receptacle 50 is used in combination with the mounting bracket 132, the cavity 142 is bounded by the walls of the rasp bar element 134 and/or the mounting bracket 132 in addition to receptacle 50. The receptacle 50 can optionally include an injection port 52 extending into the cavity for receiving an injection nozzle that provides fill material 144.

It will be appreciated by those skilled in the art that changes could be made to the embodiments described above without departing from the broad inventive concept thereof. It is understood, therefore, that this invention is not limited to the particular embodiments disclosed, but it is intended to cover modifications within the scope of the present invention as defined by the appended claims.

## Claims

1. A method of preventing debris accumulation within voids of crop engaging components of an agricultural combine, **characterized in that** said method comprises the steps of:
- identifying a cavity (36, 142) of a crop engaging component of an agricultural combine; and
- injecting within the cavity (36, 142) a fill material (38, 144) in an amount such that the cavity (36, 142) is filled with the fill material (38, 144) and adheres to the cavity (36, 142).

2. A method according to claim 1 **characterized in that**:
said method further comprises the steps of:
- providing a receptacle (50) having an injection port (52) for capping the cavity (36, 142); and
- attaching the receptacle (50) to cap the cavity (36, 142); and
said injecting step comprises:
- injecting within said cavity (36, 142) said fill material (38, 144) through said injection port (52).

3. The method of claim 2, wherein the injection port (52) extends into the cavity (36, 142) for receiving an injection nozzle that provides fill material (38, 144).

4. The method of any of the claims 2 or 3, wherein the receptacle (50) includes a fastener (56) configured to retain the receptacle (50) on the cavity (36, 142) to cap the cavity (36, 142).

5. The method of claim 4, wherein the fastener (56) is a snap-fit connection.

6. The method of any of the claims 4 or 5, wherein the receptacle (50) includes a plurality of fasteners (56) generally circumscribing the injection port (52).

7. The method of any of the preceding claims, wherein the fill material (38, 144) is a self-expanding, self-curing foam.

8. The method of any of the preceding claims, wherein that it further comprises the step of trimming the fill material (38, 144) after the fill material (38, 144) expands to generally match the surface contours of the cavity (36, 142).

9. The method of any of the preceding claims, wherein the cavity (36, 142) is partially or completely filled with the fill material (38, 144).

10. A rasp bar (130) for mounting on a rotor (26, 126) of an agricultural combine (10) comprising:
- a rasp bar element (134) that includes:
- a roof section (134a),
- a front wall section (134b) connected to the roof section (134a), and
- lateral side wall sections (134c, 134d) connected to the roof section (134a);
- a mounting bracket (132) connectable to the rotor (26, 126), the mounting bracket (32, 132) including:
- an upper wall section (132a),
- a side wall section (132c, 132d) connected to the upper wall section (132a), and
- a back wall section (132b) connected to the upper wall section (132a);
- a fastener (108) for connecting the rasp bar element (134) to the mounting bracket (132); and
- a cavity (142) formed by at least one of the rasp bar element (134) and mounting bracket (132),
**characterized in that** said cavity (142) is filled with a fill material (144).

11. The rasp bar (130) of claim 10, wherein the fill material (144) is a self-expanding, self-curing foam.

12. The rasp bar of claim 10 or 11, further comprising a receptacle (50) for connecting to the cavity (142).

13. The rasp bar of any of the claims 10 to 12, further comprising a receptacle (50) connected to the back wall section of the mounting bracket (132b), wherein the upper, side, and back wall sections of the mounting bracket (132a, b, c, d) and the receptacle (50) form the cavity (142).

14. The rasp bar of claim 12 or 13, wherein the receptacle (50) includes an injection port (52) extending into the cavity (142) for receiving an injection nozzle that provides fill material (144).

15. The rasp bar of any of the claims12 to 14, wherein the receptacle (50) includes a fastener (56), in particular a snap-fit connection, configured to retain the receptacle (50) on the cavity (36, 142) to cap the cavity.

## Patentansprüche

1. Ein Verfahren zum Verhindern der Ansammlung von Ablagerungen in Leerräumen von mit Erntematerial in Eingriff kommenden Bauteilen eines landwirtschaftlichen Mähdreschers, **dadurch gekennzeichnet, dass** das Verfahren die folgenden Schritte umfasst:
- Identifizieren eines Hohlraumes (36, 142) einer mit Erntematerial in Eingriff kommenden Komponente eines landwirtschaftlichen Mähdreschers; und
- Injizieren eines Füllmaterials (38, 144) in den Hohlraum (36, 142) in einer derartigen Menge, dass der Hohlraum (36, 142) mit dem Füllmaterial (38, 144) gefüllt ist und an dem Hohlraum (36, 142) anhaftet.

2. Verfahren nach Anspruch 1, **dadurch gekennzeichnet, dass** das Verfahren weiterhin die folgenden Schritte umfasst:
- Bereitstellen einer Aufnahme (50) mit einem Injektions-Anschluss (42) zum Abdecken des Hohlraumes (36, 142); und
- Anbringen der Aufnahme (50) zum Abdecken des Hohlraumes (36, 142); und
wobei der Injektions-Schritt Folgendes umfasst:
- Injizieren des Füllmaterials (38, 144) in den Hohlraum (36, 142) durch den Injektions-Anschluss (52) hindurch.

3. Verfahren nach Anspruch 2, bei dem der Injektions-Anschluss sich in den Hohlraum (36, 142) erstreckt, um eine Injektionsdüse aufzunehmen, die das Füllmaterial (38, 144) liefert.

4. Verfahren nach einem der Ansprüche 2 oder 3, bei dem die Aufnahme (50) ein Befestigungselement (56) einschließt, das zum Festhalten der Aufnahme (50) auf dem Hohlraum (36, 142) konfiguriert ist, um den Hohlraum (36, 142) abzudecken.

5. Verfahren nach Anspruch 4, bei dem das Befestigungselement (56) eine Einrastverbindung ist.

6. Verfahren nach einem der Ansprüche 4 oder 5, bei dem die Aufnahme (60) eine Mehrzahl von Befestigungselementen (56) einschließt, die allgemein den Injektions-Anschluss (52) umgeben.

7. Verfahren nach einem der vorhergehenden Ansprüche, bei dem das Füllmaterial (38, 144) ein selbstexpandierender selbsthärtender Schaum ist.

8. Das Verfahren nach einem der vorhergehenden Ansprüche, das weiterhin das Beschneiden des Füllmaterials (38, 144) nach der Expansion des Füllmaterials (38, 144) derart umfasst, dass es im Wesentlichen an die Oberflächenkontur des Hohlraumes (36, 142) angepasst ist.

9. Das Verfahren nach einem der vorhergehenden Ansprüche, bei dem der Hohlraum (36, 142) teilweise oder vollständig mit dem Füllmaterial (38, 144) gefüllt wird.

10. Eine Schlagleiste (130) zur Befestigung auf einem Rotor (26, 126) eines landwirtschaftlichen Mähdreschers (10), mit:
- einem Schlagleisten-Element (134), das Folgendes einschließt:
- einen Dachabschnitt (134a),
- einen Vorderwand-Abschnitt (134b), der mit dem Dachabschnitt (134a) verbunden ist; und
- Seitenwand-Abschnitte (134c, 134d), die mit dem Dachabschnitt (134a) verbunden sind;
- einem Befestigungsbügel (132), der mit dem Rotor (26, 126) verbindbar ist, wobei der Befestigungsbügel (32, 132) Folgendes einschließt:
- einen oberen Wandabschnitt (132a),
- einen Seitenwand-Abschnitt (132c, 132d), der mit dem oberen Wandabschnitt (132a) verbunden ist, und
- einen Rückwand-Abschnitt (132b) der mit dem oberen Wandabschnitt (132a) verbunden ist;
- ein Befestigungsmittel (108) zum Verbinden des Schlagleisten-Elementes (134) mit dem Befestigungsbügel (132); und
- einen Hohlraum (142), der durch zumindest eines von dem Schlagleisten-Element (134) und dem Befestigungsbügel (132) gebildet ist,
- **dadurch gekennzeichnet, dass** der Hohlraum (142) mit einem Füllmaterial (144) gefüllt ist.

11. Die Schlagleiste (130) nach Anspruch 10, bei dem das Füllmaterial (144) ein selbstexpandierender selbsthärtender Schaum ist.

12. Die Schlagleiste nach Anspruch 10 oder 11, die weiterhin eine Aufnahme (50) zur Verbindung mit dem Hohlraum (142) umfasst.

13. Die Schlagleiste nach einem der Ansprüche 10 bis 12, die weiterhin eine Aufnahme (50) umfasst, die mit dem Rückwand-Abschnitt des Befestigungsbügels (132b) verbunden ist, wobei die oberen, seitlichen und hinteren Wandabschnitte des Befestigungsbügels (132a, b, c, d) und die Aufnahme (50) den Hohlraum (142) bilden.

14. Die Schlagleiste nach Anspruch 12 oder 13, bei der die Aufnahme (50) einen Injektions-Anschluss (52) einschließt, der sich in den Hohlraum (142) zur Aufnahme einer Injektionsdüse erstreckt, die Füllmaterial (144) liefert.

15. Die Schlagleiste nach einem der Ansprüche 12 bis 14, bei der die Aufnahme (50) ein Befestigungselement (56), insbesondere eine EinrastVerbindung einschließt, die zum Festhalten der Aufnahme (50) auf dem Hohlraum (36, 142) konfiguriert ist, um den Hohlraum abzudecken.

## Revendications

1. Procédé permettant d'empêcher l'accumulation de débris dans des vides de composants d'engagement des récoltes d'une moissonneuse-batteuse, **caractérisé en ce que** le procédé comprend les étapes consistant à :
- identifier une cavité (36, 142) d'un composant d'engagement des récoltes d'une moissonneuse-batteuse, et
- injecter dans la cavité (36, 142) un matériau de remplissage (38, 144) dans une quantité telle que la cavité (36, 142) est remplie avec ce matériau de remplissage (38, 144) et que ce matériau adhère à la cavité (36, 142).

2. Procédé selon la revendication 1, **caractérisé en ce que** :
le dit procédé comprend en plus les étapes consistant à :
- prévoir un réceptacle (50) comportant un orifice d'injection (52) pour obturer la cavité (cap) (36, 142), et
- fixer le réceptacle (50) pour obturer la cavité (36, 142), et
ladite étape d'injection consiste à :
- injecter dans ladite cavité (36, 142) ledit matériau de remplissage (38, 144) par ledit orifice d'injection (52).

3. Procédé selon la revendication 2, **caractérisé en ce que** l'orifice d'injection (52) s'étend dans la cavité (36, 142) pour recevoir une buse d'injection qui délivre le matériau de remplissage (38, 144).

4. Procédé selon l'une quelconque des revendications 2 ou 3, **caractérisé en ce que** le réceptacle (50) comprend une fixation (56) conçue pour maintenir le réceptacle (50) sur la cavité (36, 142) pour obturer la cavité (36, 142).

5. Procédé selon la revendication 4, **caractérisé en ce que** la fixation (56) est un raccord encliquetable.

6. Procédé selon l'une quelconque des revendications 4 ou 5, **caractérisé en ce que** le réceptacle (50) comprend une pluralité de fixations (56) circonscrivant généralement l'orifice d'injection (52).

7. Procédé selon l'une quelconque de revendications précédentes, **caractérisé en ce que** le matériau de remplissage (38, 144) est une mousse auto-expansible, auto-polymérisable.

8. Procédé selon l'une quelconque de revendications précédentes, **caractérisé en ce qu'**il comprend en plus l'étape consistant à ébavurer le matériau de remplissage (38, 144) une fois que le matériau de remplissage (38, 144) s'est dilaté pour épouser généralement les contours de la surface de la cavité (36, 142).

9. Procédé selon l'une quelconque des revendications précédentes, **caractérisé en ce que** la cavité (36, 142) est partiellement ou entièrement remplie avec le matériau de remplissage (38, 144).

10. Batte striée (130) pour monter sur un rotor (26, 126) d'une moissonneuse-batteuse (10) comprenant :
- un élément de batte striée (134) qui comporte :
- une partie faîtière (134a),
- une partie de paroi frontale (134b) reliée à la partie faîtière (134a),
et
- des parties de paroi latérale (134c, 134d), reliées à la partie faîtière (134a);
- un support de montage (132) pouvant être connecté au rotor (26, 126), le support de montage (32, 132) incluant :
- une partie de paroi supérieure (132 a),
- une partie de paroi latérale (132c, 132d) reliée à la partie de paroi supérieure (132 a), et
- une partie de paroi de fond (132b) reliée à la partie de paroi supérieure (132 a);
- une fixation (108) pour relier l'élément de batte striée (134) au support de montage (132), et
- une cavité (142) formée par au moins un de l'élément de batte striée (134) et du support de montage (132),
**caractérisée en ce que** ladite cavité (142) est remplie d'un matériau de remplissage (144).

11. Batte striée (130) selon la revendication 10, **caractérisée en ce que** le matériau de remplissage (144) est une mousse auto-expansible, auto-polymérisable.

12. Batte striée (130) selon les revendications 10 ou 11, comprenant en plus un réceptacle (50) pour relier à la cavité (142).

13. Batte striée selon une quelconque des revendications 10 à 12, comprenant en plus un réceptacle (50) connecté à la partie de paroi de fond du support de montage (132b), moyennant quoi les parties supérieure, latérale et de paroi de fond du support de montage (132a, b, c, d) et le réceptacle (50) forment la cavité (142).

14. Batte striée selon les revendications 12 ou 13, **caractérisée en ce que** le réceptacle (50) comprend un orifice d'injection (52) s'étendant dans la cavité (142) pour recevoir une buse d'injection qui délivre un matériau de remplissage (144).

15. Batte striée selon l'une quelconque des revendications 12 à 14, **caractérisée en ce que** le réceptacle (50) comprend une fixation (56), en particulier un raccord encliquetable, conçue pour maintenir le réceptacle (50) sur la cavité (36, 142) pour obturer la cavité.
